# EUROPEAN PATENT APPLICATION

(11) **EP 2 706 084 A1**
(43) Date of publication of application: **12.03.2014**
(21) Application number: 13183053.1
(22) Date of filing: 05.09.2013
(51) Int. Cl.: C08J 9/10, C09J 7/02

(54) **Ethylene-propylene-diene rubber foamed material, producing method thereof, and sealing material**

(30) Priority: 05.09.2012 JP 2012195396
(71) Applicant: NITTO DENKO CORPORATION, Ibaraki-shi, Osaka 567-8680 (JP)
(72) Inventor: Kousaka, Takumi, Osaka, 567-8680, (JP); Hirai, Bunta, Osakai, 567-8680, (JP)
(74) Representative: Schwabe - Sandmair - Marx

(57) **Abstract**

An ethylene-propylene-diene rubber foamed material is obtained by foaming a rubber composition containing an ethylene-propylene-diene rubber and a cross-linking agent. The cross-linking agent does not contain sulfur and contains a thiuram compound and the mixing ratio of the thiuram compound with respect to 100 parts by mass of the ethylene-propylene-diene rubber is 0.05 parts by mass or more and less than 20 parts by mass.

## Description

### CROSS-REFERENCE TO RELATED APPLICATION

### BACKGROUND OF THE INVENTION

### Field of the Invention

The present invention relates to an ethylene-propylene-diene rubber foamed material, a producing method thereof, and a sealing material, to be specific, to an ethylene-propylene-diene rubber foamed material preferably used as a sealing material for various industrial products, a sealing material including the ethylene-propylene-diene rubber foamed material, and a method for producing an ethylene-propylene-diene rubber foamed material.

### Description of Related Art

As a sealing material for various industrial products, an EPDM foamed material obtained by foaming an ethylene-propylene-diene rubber (hereinafter, may be abbreviated as an EPDM) has been conventionally known.

For example, an EPDM foamed material obtained by foaming an EPDM with a foaming agent and cross-linking the EPDM with a cross-linking agent (a vulcanizing agent) such as sulfur S₈ has been proposed (ref: for example, Japanese Unexamined Patent Publication No. 2006-182796). The EPDM foamed material in Patent Document 1 has a low resilience and excellent sealing properties.

### SUMMARY OF THE INVENTION

In recent years, there may be a case where a sealing material is provided in a member near an engine of a vehicle. In such a case, heat generated from the engine is conducted to the sealing material via the member. In this case, there is a disadvantage that the sealing material is heated at a high temperature for a long time, so that various properties including the sealing properties are easily reduced.

The EPDM in Patent Document 1, in particular, is cross-linked with the sulfur S₈, so that there is a disadvantage that when the sealing material is exposed to a high temperature atmosphere, as described above, the sulfur S₈ in the form of a straight chain contained in the EPDM foamed material as a cross-linked part is cleaved (cut) and thus, various properties are further easily reduced.

It is an object of the present invention to provide an ethylene-propylene-diene rubber foamed material having excellent heat resistance, a producing method thereof, and a sealing material.

An ethylene-propylene-diene rubber foamed material of the present invention is obtained by foaming a rubber composition containing an ethylene-propylene-diene rubber and a cross-linking agent, wherein the cross-linking agent does not contain sulfur and contains a thiuram compound and the mixing ratio of the thiuram compound with respect to 100 parts by mass of the ethylene-propylene-diene rubber is 0.05 parts by mass or more and less than 20 parts by mass.

In the ethylene-propylene-diene rubber foamed material of the present invention, it is preferable that the rubber composition contains a thiourea-based cross-linking accelerator.

In the ethylene-propylene-diene rubber foamed material of the present invention, it is preferable that the mixing ratio of the thiourea-based cross-linking accelerator with respect to 100 parts by mass of the ethylene-propylene-diene rubber is 0.5 parts by mass or more and 20 parts by mass or less.

In the ethylene-propylene-diene rubber foamed material of the present invention, it is preferable that the cross-linking agent further contains a quinoid compound.

In the ethylene-propylene-diene rubber foamed material of the present invention, it is preferable that the quinoid compound is p,p'-dibenzoylquinonedioxime.

In the ethylene-propylene-diene rubber foamed material of the present invention, it is preferable that the mixing ratio of the p,p'-dibenzoylquinonedioxime with respect to 100 parts by mass of the ethylene-propylene-diene rubber is 0.05 parts by mass or more and 10 parts by mass or less.

A sealing material of the present invention includes the above-described ethylene-propylene-diene rubber foamed material and a pressure-sensitive adhesive layer provided on one surface or both surfaces of the ethylene-propylene-diene rubber foamed material.

A method for producing an ethylene-propylene-diene rubber foamed material of the present invention includes a kneading step of kneading a rubber composition containing an ethylene-propylene-diene rubber in a content of 100 parts by mass, a cross-linking agent not containing sulfur and containing a thiuram compound in a content of 0.5 parts by mass or more and less than 20 parts by mass, a thiourea-based cross-linking accelerator in a content of 0.5 parts by mass or more and 20 parts by mass or less, a foaming agent in a content of 1 part by mass or more and 30 parts by mass or less, and a foaming auxiliary and a foaming step of heating the rubber composition to be foamed.

In the method for producing an ethylene-propylene-diene rubber foamed material of the present invention, it is preferable that a molding step of extruding the rubber composition is further included and in the foaming step, the rubber composition extruded in the molding step is cross-linked and foamed.

The EPDM foamed material of the present invention is obtained by foaming the rubber composition containing the EPDM and the cross-linking agent and the cross-linking agent does not contain the sulfur and contains the thiuram compound at a specific mixing ratio, so that it has excellent heat resistance.

The sealing material of the present invention includes the above-described ethylene-propylene-diene rubber foamed material, so that a gap between members is capable of being surely filled with the ethylene-propylene-diene rubber foamed material.

According to the method for producing an ethylene-propylene-diene rubber foamed material of the present invention, the ethylene-propylene-diene rubber foamed material having excellent heat resistance and capable of surely sealing the member even when the EPDM foamed material is exposed to a high temperature atmosphere is capable of being easily produced with excellent production efficiency.

### BRIEF DESCRIPTION OF THE DRAWINGS

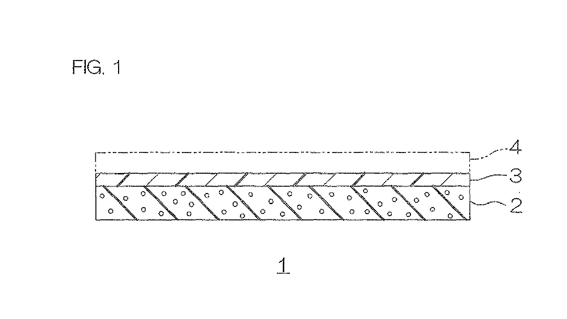

FIG. 1 shows a schematic configuration view for illustrating one embodiment of an EPDM foamed material of the present invention.

### DETAILED DESCRIPTION OF THE INVENTION

An EPDM foamed material of the present invention is obtained by foaming a rubber composition containing an EPDM and a cross-linking agent.

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent.

Examples of the dienes include 5-ethylidene-2-norbornene, 1,4-hexadiene, and dicyclopentadiene. These dienes can be used alone or in combination of two or more.

The content (the diene content) of the dienes in the EPDM is, for example, 1 mass % or more, preferably 2 mass % or more, or more preferably 3 mass % or more, and is, for example, 20 mass % or less, or preferably 15 mass % or less.

When the content of the dienes is not less than the above-described lower limit, surface shrinkage of the EPDM foamed material is capable of being prevented. When the content of the dienes is not more than the above-described upper limit, occurrence of a crack in the EPDM foamed material is capable of being prevented.

A preferable example of the EPDM includes an EPDM having long chain branching.

A method for introducing a long branched chain into the EPDM is not particularly limited and a known method is used.

To be specific, the EPDM is produced with, for example, a catalyst such as a Ziegler-Natta catalyst or a metallocene catalyst. Preferably, in view of obtaining a long branched chain, the EPDM is produced with a metallocene catalyst.

When the EPDM has long chain branching, the elongational viscosity is increased due to the entanglement of the side chain, so that the rubber composition is capable of being excellently foamed and having flexibility.

The cross-linking agent contains, as an essential component, a thiuram compound.

An example of the thiuram compound includes a thiuram sulfide shown by the following general formula (1).

General Formula (1):

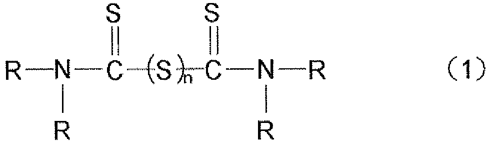

(where, in formula, Rs may be the same or different from each other and R represents a hydrogen atom or a monovalent hydrocarbon group. "n" represents an integer of 1 or more and 7 or less.)
An example of the monovalent hydrocarbon group represented by R includes a hydrocarbon group such as an aliphatic group, an alicyclic group, an aromatic aliphatic group, and an aromatic group.

An example of the aliphatic group includes an alkyl group having 1 to 10 carbon atoms such as methyl, ethyl, propyl, isopropyl, n-butyl, isobutyl, hexyl, heptyl, and 2-ethylhexyl. An example of the alicyclic group includes a cycloalkyl group having 4 to 20 carbon atoms such as cyclobutyl, cyclopentyl, and cyclohexyl. An example of the aromatic aliphatic group includes an aralkyl group having 7 to 20 carbon atoms such as benzyl and phenylethyl. An example of the aromatic group includes an aryl group having 6 to 20 carbon atoms such as phenyl, xylyl, and naphthyl.

Preferably, all of the four Rs are the same.

"n" is preferably an integer of 4 or less, more preferably an integer of 3 or less, or most preferably 2.

To be specific, an example of the thiuram sulfide includes an aliphatic group-containing thiuram disulfide such as tetramethylthiuram disulfide (TMT), tetraethylthiuram disulfide (TET), tetrabutylthiuram disulfide (TBT), and tetrakis(2-ethylhexyl)thiuram disulfide (TOT-N). An example of the thiuram sulfide also includes an aromatic aliphatic (aralkyl) group-containing thiuram disulfide such as tetrabenzylthiuram disulfide (TBZTD). Furthermore, examples thereof also include an aliphatic group-containing thiuram monosulfide such as tetramethylthiuram monosulfide (TS), an aliphatic group-containing thiuram tetrasulfide such as dipentamethylenethiuram tetrasulfide (TRA), and an aliphatic group-containing thiuram hexasulfide such as dipentamethylenethiuram hexasulfide.

These thiuram compounds can be used alone or in combination of two or more.

As the thiuram compound, preferably, thiuram disulfide is used, or more preferably, an aromatic aliphatic group-containing thiuram disulfide is used.

The mixing ratio of the thiuram compound with respect to 100 parts by mass of the EPDM is 0.05 parts by mass or more, preferably 0.1 parts by mass or more, more preferably 0.5 parts by mass or more, further more preferably 1.0 part by mass or more, or particularly preferably 2.0 parts by mass or more, and is, less than 20 parts by mass, preferably 15 parts by mass or less, more preferably 10 parts by mass or less, or further more preferably 5 parts by mass or less.

The mixing ratio of the thiuram compound in the cross-linking agent is, for example, 100 mass % or less, preferably 99 mass % or less, more preferably 90 mass % or less, or further more preferably 75 mass % or less, and is, for example, 1 mass % or more, preferably 25 mass % or more, more preferably 60 mass % or more, or further more preferably 75 mass % or more.

When the mixing proportion of the thiuram compound is above the above-described upper limit, there may be a case where the mixing proportion of the thiuram compound is excessive, so that foaming becomes defective.

On the other hand, when the mixing proportion of the thiuram compound is below the above-described lower limit, there may be a case where the mixing proportion of the thiuram compound is too little, so that cross-linking with the thiuram compound becomes insufficient.

The cross-linking agent can contain, as an optional component, a quinoid compound.

The quinoid compound is an organic compound (a quinoid-based cross-linking agent) having a quinoid structure. Examples thereof include p-quinonedioxime, poly-p-dinitrosobenzene, and a derivative thereof. To be specific, an example of the derivative of the p-quinonedioxime includes p,p'-dibenzoylquinonedioxime.

These quinoid compounds can be used alone or in combination of two or more.

As the quinoid compound, preferably, a derivative of p-quinonedioxime is used, or more preferably, p,p'-dibenzoylquinonedioxime is used.

By allowing the quinoid compound to be contained in the cross-linking agent, the tensile strength of the EPDM foamed material is capable of being improved.

The mixing ratio of the quinoid compound with respect to 100 parts by mass of the EPDM is, for example, 0.05 parts by mass or more, preferably 0.5 parts by mass or more, or more preferably 1 part by mass or more, and is, for example, 20 parts by mass or less, preferably 10 parts by mass or less, or more preferably 5 parts by mass or less. Among all, when the quinoid compound is p,p'-dibenzoylquinonedioxime, the mixing ratio thereof with respect to 100 parts by mass of the EPDM is, for example, 0.05 parts by mass or more, and is preferably 10 parts by mass or less, or more preferably 5 parts by mass or less.

The mixing ratio of the quinoid compound with respect to 100 parts by mass of the thiuram compound is, for example, 250 parts by mass or less, preferably 100 parts by mass or less, or more preferably 50 parts by mass or less, and is, for example, 1 part by mass or more, or preferably 5 parts by mass or more.

When the mixing proportion of the quinoid compound is within the above-described range, the tensile strength of the EPDM foamed material is capable of being further improved.

Also, an organic peroxide can be added to the optional component in the cross-linking agent. Examples thereof include dicumyl peroxide, dimethyl di(t-butylperoxy)hexane, 1,1-di(t-butylperoxy)cyclohexane, and α,α'-di(t-butylperoxy)diisopropyl benzene. The addition ratio of the organic peroxide, for example, with respect to 100 parts by mass of the above-described essential component (the thiuram compound) is, for example, 10 parts by mass or less, or preferably 0.1 parts by mass or less.

The cross-linking agent does not contain sulfur (including S₈), while containing, as an essential component, a thiuram compound and containing, as an optional component, a quinoid compound as required.

The cross-linking agent does not contain sulfur and contains a thiuram compound at a specific proportion, so that the cross-linking of a sulfur atom S caused by the thiuram compound is capable of being imparted to the EPDM instead of the cross-linking of the sulfur S₈.

In the EPDM foamed material, a cross-linked part (-S-) based on a sulfur atom (S) having a relatively short chain length of the thiuram compound is formed instead of a cross-linked part (a vulcanized part, to be specific, -S₈- or the like) of the sulfur (S₈) having a relatively long chain length and when the EPDM foamed material is exposed to a high temperature atmosphere, a change of the properties (a compressive load value to be described later and the like) based on cleavage (cutting) of the cross-linked part of the sulfur (-S₈-) is capable of being suppressed.

The rubber composition contains a foaming agent.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and anylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaku Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents. Preferably, an azo foaming agent is used. These foaming agents can be used alone or in combination of two or more.

The mixing ratio of the foaming agent with respect to 100 parts by mass of the EPDM is, for example, 0.1 parts by mass or more, or preferably 1 part by mass or more, and is, for example, 50 parts by mass or less, or preferably 30 parts by mass or less.

More preferably, the rubber composition contains a thiourea-based cross-linking accelerator, a cross-linking auxiliary, and a foaming auxiliary.

Examples of the thiourea-based cross-linking accelerator include thiourea, N,N'-diethylthiourea (1,3-diethylthiourea), N,N'-dibutylthiourea (1,3-dibutylthiaurea), 2-mercaptoimidazoline (ethylenethiourea), and trimethylthiourea. Preferably, N,N'-diethylthiourea and N,N'-dibutylthiourea are used.

These thiourea-based cross-linking accelerators can be used alone or in combination of two or more. Preferably, N,N'-diethylthiourea or N,N'-dibutylthiourea is used alone.

By allowing the thiourea-based cross-linking accelerator to be contained in the rubber composition, the cross-linking can be accelerated by the cross-linking agent containing the thiuram compound.

The mixing ratio of the thiourea-based cross-linking accelerator with respect to 100 parts by mass of the EPDM is, for example, 0.01 parts by mass or more, preferably 0.1 parts by mass or more, more preferably 0.5 parts by mass or more, or furthre more preferably 1 part by mass or more, and is, for example, 20 parts by mass or less, preferably 10 parts by mass or less, or more preferably 4 parts by mass or less. The mixing ratio of the thiourea-based cross-linking accelerator with respect to 100 parts by mass of the cross-linking agent is, for example, 1 part by mass or more, preferably 2 parts by mass or more, or more preferably 5 parts by mass or more, and is, for example, 100 parts by mass or less, preferably 80 parts by mass or less, or more preferably 60 parts by mass or less.

When the mixing proportion of the thiourea-based cross-linking accelerator is within the above-described range, the cross-linking with the cross-linking agent containing the thiuram compound is capable of being further accelerated.

Examples of the cross-linking auxiliary include a metal oxide such as zinc oxide, fatty acids such as stearic acid and esters thereof, and a metal soap such as zinc stearate.

As the cross-linking auxiliary, preferably, a metal oxide and fatty acids are used.

These cross-linking auxiliaries can be used alone or in combination of two or more. Preferably, a metal oxide and fatty acids are used in combination.

The mixing ratio (when a metal oxide and fatty acids are used in combination, the ratio of the total amount thereof) of the cross-linking auxiliary with respect to 100 parts by mass of the EPDM is, for example, 0.01 parts by mass or more, preferably 0.1 parts by mass or more, or more preferably 1 part by mass or more, and is, for example, 20 parts by mass or less, preferably 15 parts by mass or less, or more preferably 10 parts by mass or less.

The mixing ratio of the cross-linking auxiliary with respect to 100 parts by mass of the cross-linking agent is, for example, 10 parts by mass or more, preferably 25 parts by mass or more, or more preferably 50 parts by mass or more, and is, for example, 1000 parts by mass or less, preferably 500 parts by mass or less, more preferably 250 parts by mass or less, or further more preferably 170 parts by mass or less.

When the metal oxide and the fatty acids are used in combination, the mixing ratio of the fatty acids with respect to 100 parts by mass of the metal oxide is, for example, 10 parts by mass or more, or preferably 30 parts by mass or more, and is, for example, 200 parts by mass or less, preferably 100 parts by mass or less, or more preferably 70 parts by mass or less.

Examples of the foaming auxiliary include a urea foaming auxiliary, a salicylic acid foaming auxiliary, and a benzoic acid foaming auxiliary. Preferably, a urea foaming auxiliary is used.

These foaming auxiliaries can be used alone or in combination of two or more.

The mixing ratio of the foaming auxiliary with respect to 100 parts by mass of the EPDM is, for example, 0.5 parts by mass or more, or preferably 1 part by mass or more, and is, for example, 20 parts by mass or less, or preferably 10 parts by mass or less. The mixing ratio of the foaming auxiliary with respect to 100 parts by mass of the foaming agent is, for example, 10 parts by mass or more, or preferably 20 parts by mass or more, and is, for example, 100 parts by mass or less, preferably 50 parts by mass or less, or more preferably 30 parts by mass or less.

The rubber composition can appropriately contain a filler, a softener, an oxidation inhibitor, or the like as required.

Examples of the filler include an inorganic filler such as calcium carbonate (including heavy calcium carbonate), magnesium carbonate, silicic acid and salts thereof, clay, talc, mica powders, bentonite, silica, alumina, aluminum silicate, aluminum powders, and carbon black; an organic filler such as cork; and other known fillers. The average particle size of the filler is, for example, 0.1 µm or more and 100 µm or less. These fillers can be used alone or in combination of two or more. The mixing ratio of the filler with respect to 100 parts by mass of the EPDM is, for example, 10 parts by mass or more, preferably 30 parts by mass or more, or more preferably 50 parts by mass or more, and is, for example, 300 parts by mass or less, or preferably 250 parts by mass or less.

Examples of the softener include petroleum oils (for example, paraffinic oil (including paraffinic process oil), naphthenic oil (including naphthenic process oil), drying oils and animal and vegetable oils (for example, linseed oil), and aromatic oil); asphalts; low molecular weight polymers; and organic acid esters (for example, phthalic ester (for example, di-2-ethylhexyl phthalate (DOP) and dibutyl phthalate (DBP)), phosphate ester, higher fatty acid ester, and alkyl sulfonate ester). Preferably, petroleum oils are used, or more preferably, paraffinic oil is used. These softeners can be used alone or in combination of two or more. The mixing ratio of the softener with respect to 100 parts by mass of the EPDM is, for example, 5 parts by mass or more, or preferably 10 parts by mass or more, and is, for example, 100 parts by mass or less, or preferably 50 parts by mass or less.

An example of the oxidation inhibitor includes a secondary amine compound (an aromatic secondary amine compound and the like) such as 4,4'-bis(α,α-dimethylbenzyl)diphenylamine and N,N'-di-2-naphthyl-p-phenylenediamine. These oxidation inhibitors can be used alone or in combination. The mixing ratio of the oxidation inhibitor with respect to 100 parts by mass of the EPDM is, for example, 0.05 parts by mass or more, or preferably 0.1 parts by mass or more, and is, for example, 20 parts by mass or less, preferably 10 parts by mass or less, or more preferably 5 parts by mass or less.

Furthermore, the rubber composition can contain a known additive at an appropriate proportion as long as it does not damage the excellent effect of the EPDM foamed material to be obtained in accordance with its purpose and use. Examples of the known additive include a polymer other than the EPDM, a flame retardant, a plasticizer, a tackifier, an antioxidant, a colorant, and a fungicide.

On the other hand, preferably, the rubber composition does not contain a cross-linking retardant (a vulcanizing retardant) such as thiazoles and dithiocarbamates.

Thus, the EPDM foamed material has excellent heat resistance and is capable of suppressing a change of the properties caused by exposure under a high temperature atmosphere.

When the rubber composition does not contain the above-described cross-linking retardant, the content proportion of the sulfur atom S of the EPDM foamed material is capable of being reduced and a reduction of the corrosive properties can be achieved.

Next, a method for producing the EPDM foamed material is described.

In order to produce the EPDM foamed material, first, the above-described components are blended to be kneaded using a kneader, a mixer, a mixing roller, or the like, so that the rubber composition is prepared as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained.

The obtained rubber composition (the kneaded material) is extruded into a sheet shape or the like using an extruder (a molding step) and the extruded rubber composition is heated to be foamed (a foaming step). A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation, at, for example, 40°C or more, or preferably 60°C or more, and at, for example, 200°C or less, or preferably 160°C or less for, for example, 1 minute or more, or preferably 5 minutes or more, and for, for example, 60 minutes or less, or preferably 40 minutes or less. After the preheating, the rubber composition is heated at, for example, 450°C or less, preferably 350°C or less, or more preferably 250°C or less, and at, for example, 100°C or more, or preferably 120°C or more for, for example, 5 minutes or more, or preferably 15 minutes or more, and for, for example, 80 minutes or less, or preferably 50 minutes or less.

According to the method for producing the EPDM foamed material, the EPDM foamed material capable of sealing a gap between the members with excellent adhesiveness and excellent followability to irregularities is capable of being easily and surely produced.

The obtained rubber composition is extruded into a sheet shape using an extruder, while being heated (a molding step) (that is, a rubber composition sheet is fabricated) and the rubber composition in a sheet shape (the rubber composition sheet) can be continuously cross-linked and foamed (a foaming step).

According to this method, the EPDM foamed material is capable of being produced with excellent production efficiency.

In this way, the rubber composition is foamed and cross-linked, so that the EPDM foamed material is capable of being obtained.

According to the method for producing the EPDM foamed material, the EPDM foamed material in a desired shape is capable of being easily and surely produced with excellent production efficiency.

The obtained EPDM foamed material has a thickness of, for example, 0.1 mm or more, preferably 1 mm or more, and of, for example, 50 mm or less, or preferably 45 mm or less.

The EPDM foamed material has, for example, an open cell structure (an open cell ratio of 100 %) or a semi-open/semi-closed cell structure (an open cell ratio of, for example, above 0 %, or preferably 10 % or more, and of, for example, less than 100 %, or preferably 98 % or less). Preferably, the EPDM foamed material has a semi-open/semi-closed cell structure.

When the EPDM foamed material has a semi-open/semi-closed cell structure, the improvement of the flexibility can be achieved and furthermore, the improvement of the filling properties of the EPDM foamed material in a gap between the members can be achieved.

The EPDM foamed material obtained in this way has a volume expansion ratio (a density ratio before and after foaming) of, for example, two times or more, or preferably five times or more, and of, for example, 30 times or less.

The EPDM foamed material has an 80 % compressive load value (in conformity with JIS K 6767 (1999)) of, for example, 0.1 N/m² or more, and of, for example, 10 N/cm² or less, preferably 5.0 N/cm² or less, or more preferably 2.5 N/cm² or less.

When the 80 % compressive load value of the EPDM foamed material is not less than the above-described lower limit, the flexibility of the EPDM foamed material can be improved and thus, the adhesiveness to a member and the followability to irregularities can be improved. On the other hand, when the 80 % compressive load value of the EPDM foamed material is not more than the above-described upper limit, the improvement of the flexibility is possible and a deformation of a casing (a member) can be prevented.

The EPDM foamed material has an apparent density (in conformity with JIS K 6767 (1999)) of, for example, 0.50 g/cm³ or less, preferably 0.20 g/cm³ or less, or more preferably 0.10 g/cm³ or less, and of, for example, 0.01 g/cm³ or more. When the apparent density of the EPDM foamed material is within the above-described range, the EPDM foamed material is capable of excellently sealing a gap between the members.

The EPDM foamed material has an elongation (a breaking elongation in conformity with JIS K 6767 (1999)) of, for example, 10 % or more, or preferably 150 % or more, and of, for example, 1500 % or less, or preferably 1000 % or less.

The EPDM foamed material has a tensile strength (the maximum load in a tensile test in conformity with JIS K 6767 (1999)) of, for example, 1.0 N/cm² or more, or preferably 2.0 N/cm² or more, and of, for example, 50 N/cm² or less, preferably 30.0 N/cm² or less, more preferably 10 N/cm² or less, further more preferably 8 N/cm² or less, or particularly preferably 6 N/cm² or less.

The use of the EPDM foamed material is not particularly limited and the EPDM foamed material can be used as, for example, a vibration-proof material, a sound absorbing material, a sound insulation material, a dust-proof material, a heat insulating material, a buffer material, or a water-stop material, which fills a gap between various members for the purpose of, for example, damping, sound absorption, sound insulation, dust-proof, heat insulation, buffering, or water tight.

The EPDM foamed material is obtained by foaming the rubber composition containing the EPDM and the cross-linking agent and the cross-linking agent does not contain sulfur and contains the thiuram compound at a specific mixing ratio, so that it has excellent heat resistance.

Thus, an example of the member in which the EPDM foamed material is provided includes a member that is made of a metal such as iron, steel, stainless steel, or aluminum; is, for example, disposed around an engine of a vehicle; and is exposed to a high temperature atmosphere of, for example, 100°C or more, furthermore 110°C or more, or furthermore 130°C or more, and of, for example, 150°C or less.

The EPDM foamed material has excellent heat resistance, has excellent adhesiveness and followability to irregularities, and is capable of sealing a gap between the members, so that it can be preferably used as a sealing material.

In order to use the EPDM foamed material in a sealing material, for example, a sealing material in which a pressure-sensitive adhesive layer for attaching the EPDM foamed material thereto is provided on the surface of the EPDM foamed material is prepared. That is, a sealing material that includes the EPDM foamed material and the pressure-sensitive adhesive layer is prepared.

FIG. 1 shows a schematic configuration view for illustrating one embodiment of an EPDM foamed material of the present invention.

As shown in FIG. 1, a sealing material 1 includes an EPDM foamed material 2 and a pressure-sensitive adhesive layer 3 that is laminated on the EPDM foamed material 2 (and furthermore, a separator 4 that is laminated on the pressure-sensitive adhesive layer 3 as required (ref: a phantom line)).

A method for laminating the pressure-sensitive adhesive layer 3 on the EPDM foamed material 2 is not particularly limited and the pressure-sensitive adhesive layer 3 can be attached to the EPDM foamed material 2 using a known method. For example, first, the EPDM foamed material 2 is produced by the above-described method, so that a foamed material layer 2 prepared from the EPDM foamed material 2 is obtained. Next, the pressure-sensitive adhesive layer 3 is laminated on the surface of the foamed material layer 2 by a known method. In this way, the sealing material 1 is obtained as a pressure-sensitive adhesive sealing material 1.

The pressure-sensitive adhesive layer 3 is, for example, formed from a pressure-sensitive adhesive in a layered state by a known method.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 µm or more, preferably 50 µm or more, and of, for example, 10000 µm or less, or preferably 5000 µm or less.

The sealing material 1 is attached to a member, among all, a member in which the temperature is increased to be high, by the pressure-sensitive adhesive force of the pressure-sensitive adhesive layer 3, so that a gap between the members can be sealed by the EPDM foamed material 2.

According to the sealing material 1, the above-described EPDM foamed material is included therein, so that it has excellent heat resistance. Thus, the EPDM foamed material is capable of being surely brought into tight contact with the member, so that a gap between the members is capable of being surely filled.

In the description in FIG. 1, the pressure-sensitive adhesive layer 3 is formed as a substrateless-type pressure-sensitive adhesive tape or sheet that is formed from the pressure-sensitive adhesive only. Alternatively, for example, though not shown, the pressure-sensitive adhesive layer 3 can be also formed as a substrate-including pressure-sensitive adhesive tape or sheet that is formed from the pressure-sensitive adhesive layer 3 and a substrate.

In such a case, the pressure-sensitive adhesive layer 3 is, for example, formed as a laminated pressure-sensitive adhesive tape or sheet in which the pressure-sensitive adhesive layer 3 is provided on at least one surface of the substrate, which is not shown, or preferably is provided on both surfaces of the substrate (a laminate tape or sheet in which the pressure-sensitive adhesive layer 3, a substrate, and the pressure-sensitive adhesive layer 3 are sequentially laminated).

The substrate (not shown) is not particularly limited and examples thereof include a plastic substrate such as a plastic film or sheet; a paper-based substrate such as paper; a fiber-based substrate such as a fabric, a non-woven fabric, and a net; a metal substrate such as a metal foil and a metal plate; a rubber substrate such as a rubber sheet; a foamed substrate such as a foamed sheet; and furthermore, a laminate thereof.

A method for forming the pressure-sensitive adhesive layer 3 as a substrate-including pressure-sensitive adhesive tape or sheet is not particularly limited and a known method can be used.

In addition, in the description in FIG. 1, the pressure-sensitive adhesive layer 3 is provided on one surface (the top surface) only of the EPDM foamed material 2. Alternatively, for example, the pressure-sensitive adhesive layer 3 can be also provided on both surfaces (the top surface and the back surface) of the EPDM foamed material 2.

According to the pressure-sensitive adhesive sealing material 1, the pressure-sensitive adhesive layer 3 is provided on both surfaces of the EPDM foamed material 2, so that the EPDM foamed material 2 is capable of being further surely fixed to the member by two pressure-sensitive adhesive layers 3 and thus, a gap between the members is capable of being further surely sealed.

A separator (a release paper) can be attached to the surface (the surface that is the opposite side with respect to the back surface on which a foamed material layer is laminated) of the pressure-sensitive adhesive layer as required until it is practically used.

### Examples

While the present invention will be described hereinafter in further detail with reference to Examples and Comparative Examples, the present invention is not limited to these Examples and Comparative Examples.

### Examples 1 to 9 and Comparative Examples 1 to 5

### (1) Production of EPDM Foamed Material

An EPDM, a filler, a softener, a flame retardant, and an oxidation inhibitor were blended at a mixing amount described in the mixing formulation shown in Table 1 to be kneaded with a 3L pressurizing kneader, so that a first kneaded material was obtained.

Separately, a cross-linking agent, a cross-linking auxiliary, a foaming agent, a foaming auxiliary, and a cross-linking retardant were blended to be blended into the first kneaded material and then, the obtained mixture was kneaded with a 10-inch mixing roll to obtain a rubber composition (a second kneaded material) (a kneading step).

Next, the rubber composition was extruded into a sheet shape having a thickness of about 8 mm using a single screw extruder (45 mmφ), so that a rubber composition sheet was fabricated (a molding step).

Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, an EPDM foamed material was produced.

In Comparative Examples 1, 2, and 5, the foaming was defective, so that an EPDM foamed material was not capable of being obtained.

**Table 1**

| Ex. Comp. Ex. | | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Comp. Ex.4 | Comp. Ex. 5 |
|---|---|---|---|---|---|---|---|---|---|---|---|---|---|---|---|
| Polymer | EPDM | 100 | 100 | 100 | 100 | 100 | 100 | 100 | 100 | 100 | 100 | 100 | 100 | 100 | 100 |
| Filler | Carbon Black | 10 | 10 | 10 | 10 | 10 | 10 | 10 | 10 | 10 | 10 | 10 | 10 | 10 | 10 |
| | Heavy Calcium Carbonate | 200 | 200 | 200 | 200 | 200 | 200 | 200 | 200 | 200 | 200 | 200 | 150 | 100 | 200 |
| Softener | Asphalt | - | - | - | - | - | - | - | - | - | - | - | - | 50 | - |
| | Paraffinic Oil | 40 | 40 | 40 | 40 | 40 | 40 | 40 | 40 | 40 | 40 | 40 | 40 | 40 | 40 |
| Cross-Linking Auxiliary | Zinc Oxide | 5 | 5 | 5 | 5 | 5 | 5 | 5 | 5 | 5 | 5 | 5 | 5 | 5 | 5 |
| | Stearic Acid | 3 | 3 | 3 | 3 | 3 | 3 | 3 | 3 | 3 | 3 | 3 | 3 | 3 | 3 |
| Flame Retardant | Aluminum Hydroxide | - | - | - | - | - | - | - | - | - | - | - | 30 | - | - |
| Oxidation Inhibitor | 4,4'-bis(α,α-dimethylbenzyl)diphenylamine | - | - | - | 1.5 | 1.5 | - | - | - | - | - | - | - | - | - |
| | N,N'-di-2-naphthyl-p-phenylenediamine | - | - | - | 1.0 | 1.0 | - | - | - | - | - | - | - | - | - |
| Cross-Linking Agent | Sulfur S₈ | - | - | - | - | - | - | - | - | - | - | - | 1.5 | 1.0 | - |
| | Tetrabenzylthiuram Disulfide | 4.0 | 4.0 | 4.0 | 4.0 | 4.0 | 2.0 | 1.0 | 4.0 | 4.0 | - | 25.0 | - | - | 20.0 |
| | p,p'-dibenzoylquinonedioxime | - | - | 2.0 | - | 2.0 | - | - | 0.05 | 10.0 | - | - | - | - | - |
| Cross-Linking Accelerator | N,N'-diethylthiourea | 1.5 | - | 2.0 | 2.0 | 2.0 | 1.0 | 1.0 | 1.0 | 1.0 | - | 2.0 | - | - | 1.0 |
| | N,N'-dibutylthiourea | - | 2.0 | - | - | - | - | - | - | - | - | - | - | - | - |
| Foaming Agent | Azodicarbonamide | 20.0 | 20.0 | 20.0 | 20.0 | 20.0 | 10.0 | 10.0 | 20.0 | 20.0 | 20.0 | 20.0 | 15.0 | 20.0 | 20.0 |
| Foaming Auxiliary | Urea-Based | 5.0 | 5.0 | 5.0 | 5.0 | 5.0 | 2.5 | 2.5 | 5.0 | 5.0 | 5.0 | 5.0 | 10.0 | 10.0 | 5.0 |
| Cross-Linking Retardant | Zinc Dimethyldithiocarbamate | - | - | - | - | - | - | - | - | - | - | - | - | 1.0 | - |
| | Zinc Diethyldithiocarbamate | - | - | - | - | - | - | - | - | - | - | - | 2.0 | - | - |
| | 2-Mercaptobenzothiazole | - | - | - | - | - | - | - | - | - | - | - | 1.5 | 1.0 | - |

In Table 1, values show number of blended parts in each of the components.

For the abbreviations shown in Table 1, the details are given in the following.
EPDM: EPT8030M, containing long chain branching, content of diene (5-ethylidene-2-norbornene) of 9.5 mass %, catalyst: a metallocene catalyst, manufactured by Mitsui Chemicals, Inc.
Carbon Black: Asahi #50, an average particle size of 80 µm, manufactured by ASAHI CARBON CO., LTD.
Heavy Calcium Carbonate: manufactured by MARUO CALCIUM CO., LTD.
Asphalt: Trumbull Base Asphalt 4402, manufactured by Owens Coming Sales, LLC.
Paraffinic Oil: Diana Process Oil PW-380, manufactured by Idemitsu Kosan Co., Ltd.
Zinc Oxide: second-class zinc oxide, manufactured by MITSUI MINING & SMELTING CO., LTD.
Stearic Acid: stearic acid powder "Sakura", manufactured by NOF CORPORATION
Aluminum Hydroxide: HIGILITE H-32, an average particle size of 5 to 10 µm, manufactured by SHOWA DENKO K.K.
4,4'-bis(α,α-dimethylbenzyl)diphenylamine: NOCRAC CD, aromatic secondary amine-based, manufactured by OUCHI SHINKO CHEMICAL INDUSTRIAL CO., LTD.
N,N'-di-2-naphthyl-p-phenylenediamine: NOCRAC White, aromatic secondary amine-based, manufactured by OUCHI SHINKO CHEMICAL INDUSTRIAL CO., LTD.
Sulfur S₈: ALPHAGRAN S-50EN, manufactured by Touchi Co., Ltd.
Tetrabenzylthiuram Disulfide: NOCCELER TBZTD, a thiuram compound, manufactured by OUCHI SHINKO CHEMICAL INDUSTRIAL CO., LTD.
p,p'-dibenzoylquinonedioxime: VULNOC DGM, a quinoid compound, manufactured by OUCHI SHINKO CHEMICAL INDUSTRIAL CO., LTD.
N,N'-diethylthiourea: NOCCELER EUR, thiourea-based, manufactured by OUCHI SHINKO CHEMICAL INDUSTRIAL CO., LTD.
N,N'-dibutylthiourea: NOCCELER BUR, thiourea-based, manufactured by OUCHI SHINKO CHEMICAL INDUSTRIAL CO., LTD.
Azodicarbonamide: AC#LQ, manufactured by EIWA CHEMICAL IND. CO., LTD.
Urea-Based: CELLPASTE K5, manufactured by EIWA CHEMICAL IND. CO., LTD.
Zinc Dimethyldithiocarbamate: NOCCELER PZ, dithiocarbamates, manufactured by OUCHI SHINKO CHEMICAL INDUSTRIAL CO., LTD.
Zinc Diethyldithiocarbamate: NOCCELER EZ, dithiocarbamates, manufactured by OUCHI SHINKO CHEMICAL INDUSTRIAL CO., LTD.
2-Mercaptobenzothiazole: NOCCELER M, thiazoles, manufactured by OUCHI SHINKO CHEMICAL INDUSTRIAL CO., LTD.

### (2) Measurement of Properties

The properties of each of the EPDM foamed materials in Examples 1 to 9 and Comparative Examples 3 and 4 were measured by a method shown in the following. The results are shown in Table 2.

### <80 % Compressive Load Value>

The 80 % compressive load value of each of the EPDM foamed materials was measured in conformity with JIS K 6767 (1999). To be specific, a skin layer of the EPDM foamed material was removed and a test piece having a thickness of about 10 mm was prepared. Thereafter, the test piece was compressed by 80 % at a compression rate of 10 mm/min using a compression testing machine to measure an 80 % compressive load value after 10 seconds of compression.

### <Apparent Density>

The apparent density of each of the EPDM foamed materials was measured in conformity with JIS K 6767 (1999). To be specific, a skin layer of the EPDM foamed material was removed and a test piece having a thickness of about 10 mm was prepared. Thereafter, the mass was measured to calculate the mass (the apparent density) per unit volume.

### <Elongation and Tensile Strength>

The elongation and the tensile strength (the breaking elongation) of each of the EPDM foamed materials was measured in conformity with JIS K 6767 (1999). To be specific, a skin layer of the EPDM foamed material was removed and a test piece having a thickness of about 10 mm was prepared. Thereafter, the test piece was stamped out using a dumbbell No. 1 to obtain a sample for measurement. The sample for measurement was pulled with a tensile testing machine at a tension rate of 500 mm/min to measure the elongation (the breaking elongation) and the load (the tensile strength) of the sample for measurement at the time of being cut in a dumbbell shaped parallel portion.

### <Heat Resistance>

Each of the EPDM foamed materials was heated at 150°C for 10 days. The rate of change of the 80 % compressive load value, the apparent density, the elongation, and the tensile strength thereof before and after the heating was obtained, respectively, so that the heat resistance of the EPDM foamed material was evaluated.

The rate of change (%) of the 80 % compressive load value is obtained as follows: "[(80 % compressive load value after heating - 80 % compressive load value before heating) / 80 % compressive load value before heating] × 100"

The rate of change (%) of the apparent density is obtained as follows: "[(the apparent density after heating - the apparent density before heating) / the apparent density before heating] × 100"

The rate of change (%) of the elongation is obtained as follows: "[(the elongation after heating - the elongation before heating) / the elongation before heating] × 100"

The rate of change (%) of the tensile strength is obtained as follows: "[(the tensile strength after heating - the tensile strength before heating) / the tensile strength before heating] × 100"

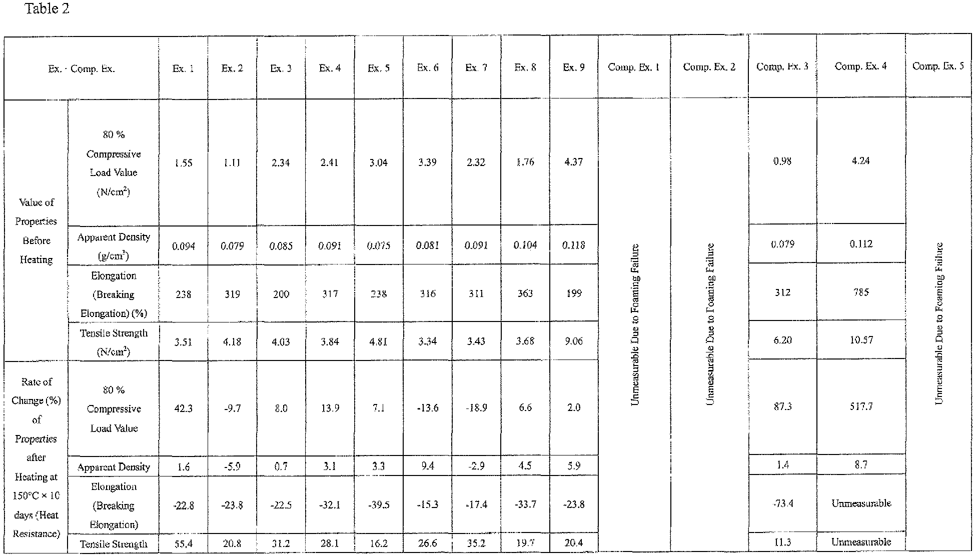

## Claims

1. An ethylene-propylene-diene rubber foamed material obtained by foaming a rubber composition containing an ethylene-propylene-diene rubber and a cross-linking agent, wherein
the cross-linking agent does not contain sulfur and contains a thiuram compound and
the mixing ratio of the thiuram compound with respect to 100 parts by mass of the ethylene-propylene-diene rubber is 0.05 parts by mass or more and less than 20 parts by mass.

2. The ethylene-propylene-diene rubber foamed material according to claim 1, wherein
the rubber composition contains a thiourea-based cross-linking accelerator.

3. The ethylene-propylene-diene rubber foamed material according to claim 2, wherein
the mixing ratio of the thiourea-based cross-linking accelerator with respect to 100 parts by mass of the ethylene-propylene-diene rubber is 0.5 parts by mass or more and 20 parts by mass or less.

4. The ethylene-propylene-diene rubber foamed material according to claim 1, wherein
the cross-linking agent further contains a quinoid compound.

5. The ethylene-propylene-diene rubber foamed material according to claim 4, wherein
the quinoid compound is p,p'-dibenzoylquinonedioxime.

6. The ethylene-propylene-diene rubber foamed material according to claim 5, wherein
the mixing ratio of the p,p'-dibenzoylquinonedioxime with respect to 100 parts by mass of the ethylene-propylene-diene rubber is 0.05 parts by mass or more and 10 parts by mass or less.

7. A sealing material comprising:
an ethylene-propylene-diene rubber foamed material and
a pressure-sensitive adhesive layer provided on one surface or both surfaces of the ethylene-propylene-diene rubber foamed material, wherein
the ethylene-propylene-diene rubber foamed material is obtained by foaming a rubber composition containing an ethylene-propylene-diene rubber and a cross-linking agent, and
the cross-linking agent does not contain sulfur and contains a thiuram compound and
the mixing ratio of the thiuram compound with respect to 100 parts by mass of the ethylene-propylene-diene rubber is 0.05 parts by mass or more and less than 20 parts by mass.

8. A method for producing an ethylene-propylene-diene rubber foamed material comprising:
a kneading step of kneading a rubber composition containing
an ethylene-propylene-diene rubber in a content of 100 parts by mass,
a cross-linking agent not containing sulfur and containing a thiuram compound in a content of 0.5 parts by mass or more and less than 20 parts by mass,
a thiourea-based cross-linking accelerator in a content of 0.5 parts by mass or more and 20 parts by mass or less,
a foaming agent in a content of 1 part by mass or more and 30 parts by mass or less, and
a foaming auxiliary and
a foaming step of heating the rubber composition to be foamed.

9. The method for producing an ethylene-propylene-diene rubber foamed material according to claim 8, wherein
a molding step of extruding the rubber composition is further included and
in the foaming step, the rubber composition extruded in the molding step is cross-linked and foamed.
